# EUROPEAN PATENT APPLICATION

(11) **EP 1 698 811 A1**
(43) Date of publication of application: **06.09.2006**
(21) Application number: 05425118.6
(22) Date of filing: 03.03.2005
(51) Int. Cl.: F16K 5/06, F16K 27/06

(54) **Valve**

(71) Applicant: Righi S.p.A., 28011 Armeno (No) (IT)
(72) Inventor: Farace, Enzo, 28011 Armeno (NO) (IT)
(74) Representative: Trupiano, Federica

(57) **Abstract**

The present invention relates to a valve (1) for fluid supply circuits comprising a body (2) couplable to a fluid supply line and provided with a channel (3) for said fluid to flow through and with a seat (5) housing an on-off element (6) for the fluid, the on-off element being movable between an open position, wherein said fluid flows through the channel, and a closed position, wherein flow of the fluid in the channel is prevented, and also comprising static means (11) to limit movement of the on-off element between the open position and the closed position. Advantageously, the static means to limit movement of the on-off element (6) are inside the body (2) of the valve.

## Description

The present invention relates to a valve for fluid distributing circuits, in particular an on-off valve for liquid distributing circuits.

On-off valves having the function of permitting, stopping or regulating the flow of a fluid in the relative distributing pipe have been available on the market for some time. Generally, valves are provided with a body inside which is provided a channel for fluid to pass through, said channel extending between an input section and an output section connectable to external supply lines, such as pipes, unions, conduits, etc.. Inside the channel is a seat in which an on-off element is housed. The on-off element is movable between an open position, in which the fluid is free to flow through the channel, and a closed position, in which the flow of fluid is prevented. When the on-off element is in an intermediate position between the open and closed position, flow of the fluid is choked or regulated, that is, the flow rate of the fluid is reduced with respect to the maximum flow rate.

Typically, valves differ according to form of the on-off element, field of application, operating pressures or nature of the fluid the flow of which is to be stopped. The fluid can, for example, be water, oil or naphtha, or air, steam or gas. On-off valves can, for example, be used in water supply lines in private dwellings, in the building trade, in industry and the like. The on-off element can generically be in the form of a butterfly, ball, etc..

The control of the on-off element, that is, the control which moves this element between the open and closed positions, can be manual or automatic/motorized.

Usually the control device is outside the body of the valve and is coupled to the on-off element by means of a connection element. By acting on the control device, the operator can move the on-off element, opening or closing the valve, or choking the flow. The control device can have different forms, such as a handle, handgrip, hand-wheel, etc..

Often, the dimensions of the control device are considerable with respect to the relative valve. For example, on-off valves used as faucets or in water supply lines in buildings have dimensions comparable with the corresponding control device. For this reason handles, handgrips, hand-wheels, levers and other control devices are often unattractive. In many applications it is also desirable to reduce their dimensions to a minimum, so that the relative valve has minimum ovetall dimensions, a pleasing appearance and minimum production and assembly costs.

As a rule, conventional manually controlled valves are provided with means to limit movement of the on-off element in the relative seat exclusively between the open and closed position, so that these positions are not exceeded. Typically, the aforesaid means comprise one or more surfaces of the control element which cooperate with outer surfaces of the valve body to block movement of the control element, and consequently movement of the on-off element, at the open and closed positions. This, for example, is the case of common ball valves, wherein rotation of the on-off element about the axis thereof is limited by specific limit stop surfaces, produced on the outer surface of the valve body, against which corresponding surfaces of the handle, or equivalent elements, come to rest.

Reduction of the dimensions of the control element in conventional valves is therefore dependent on the need to maintain said limit stop or contact surfaces.

The United States US 6,779,777 patent describes a ball valve wherein the control element is in the form of a sleeve which surrounds the valve body. The sleeve can be operated manually and moves axially, that is, it slides on the valve body parallel to the inner channel. The sleeve is connected to a pin extending inside the channel of the valve, through an opening produced in the side wall thereof, and which engages the spherical on-off element. The movement imparted on the sleeve is transmitted to the pin. Axial movement of the pin controls rotation of the on-off element. The open and closing positions therefore depend on the length of pin travel.

The valve according to the United States patent US 6,779,777, although provided with a control element with smaller dimensions with respect to the dimensions of the valve body, is complicated to produce and to assemble. The number of components is in fact high and seal of the relevant couplings is guaranteed by a noteworthy number of gaskets. Moreover, sliding of the sleeve is assisted by a specific bearing. For these reasons the production cost of the valve is also high.

The object of the present invention is to provide a valve for fluid supply systems which offers a simple and inexpensive solution to the problems of conventional valves, and which is also functional and precise, and has a pleasing appearance.

A further object of the present invention is to provide a valve for fluid supply systems which has lower production and assembly costs than the corresponding costs required for conventional valves.

Another object of the present invention is to provide a valve for fluid supply systems having a control element with minimum dimensions.

Yet another object of the present invention is to provide a valve for fluid supply systems which is simple to operate, also in the event of poor visibility or accessibility.

These and other objects are obtained by the present invention which relates to a valve for fluid distributing circuits comprising a body couplable to at least one fluid supply line, the body being provided with a channel for said fluid to flow through and a seat housing an on-off element for said fluid in said channel, said on-off element being movable between an open position, wherein said fluid flows through said channel, and a closed position, wherein flow of said fluid in said channel is prevented, and also comprisiug static means to limit movement of said on-off element between said open position and said closed position, characterized in that said static means to limit movement are inside said body.

Advantageously, the valve according to the present invention can be operated through a control element having extremely small dimensions with respect to the valve body. For example, the control element can be a screw or grub screw housed in the body of the valve, or a handgrip removably couplable to the on-off element. The overall dimensions of the valve can therefore be minimized, with obvious advantages with regard to the appearance, function and production costs thereof. Moreover, the valve is simple to produce, as the means to limit movement of the on-off element, positioned inside the valve body, are static and consequently do not require complicated assembly and the use of a large number of seal elements or the use of bearings, as instead is the case of the valve according to United States patent US 6,779,777.

According to the present invention, the static means to limit movement of the on-off element, for example to limit rotation between the open and closed positions, are housed completely inside the valve body. These means comprise at least one limit stop surface against which the on-off element comes to rest. Preferably, the limit stop surface is produced in the seat of the on-off element.

For example, a portion of the on-off element is provided with a guide and the limit stop surface is part of an element integral with the seat of the on-off element and engages the guide. Alternatively, the limit stop surface is itself a guide produced in the seat of the on-off element, the guide being engageable from a portion of said on-off element. Preferably, the guide extends along a circular sector, for example according to an arc of approximately 90 degrees, and the element which engages said guide is a pin. When the pin comes to rest against one end of the guide the on-off element is in the open or closed position. Advantageously, as the guide and the pin can be produced with narrow tolerances, the open position, that is, the completely open position of the valve, and the closed position can be reached with great precision. When the pin engages an intermediate portion of the guide the on-off element chokes the flow of fluid flowing through the valve. In this way the flow rate of the fluid flowing through the on-off element can be regulated.

Thanks to the high precision of the open and closed positions which can be obtained with the valve according to the present invention, said valve can be used in various sectors in which, for safety reasons, it is essential that there is no undesired flow of the shut-off fluid. For example, the valve can be used in the technical fluid supply lines in industry, or in oxygen or nitrogen supply lines in hospitals, etc..

Preferably, the on-off element is of the spherical type, integral with a control grub screw which can be operated from outside the valve body and with a controlled grub screw, opposed to the control grub screw with respect to the spherical element and interposed between said element and the relative seat. In this configuration the control element of the valve is the control grub screw, which can be housed concealed in the valve body. The guide can be produced in the controlled grub screw and in this case the pin is integral with the seat of the on-off eletneat. Alternatively, the guide can be produced in the seat and in this case the pin is integral with the controlled grub screw.

The control grub screw can advantageously extend, outside the valve body, according to a length much greater than the thickness of the wall of the valve body and can be coupled to external elements, fixed or optionally removable, for operation of the valve, such as handles, knobs, handgtips, hand-wheels etc.

Further aspects and advantages of the present invention will be better understood from the following description, which is given by way of illustrative and non-limiting example with reference to the annexed schematic drawings; in which:
- Figure 1 is a longitudinal sectional view of a valve according to the present invention;
- Figure 2 is a perspective and sectional view of the valve illustrated in Figure 1;
- Figure 3 is a schematic plan view of a detail of the valve in Figure 1;
- Figure 4 is a perspective view of the valve illustrated in figure 1;
- Figure 5 is a perspective view of an alternative embodiment of the valve according to the present invention;
- Figure 6 is a perspective sectional view of a further embodiment of the valve in Figure 1;
- Figure 7 is a perspective view of the valve in Figure 6.

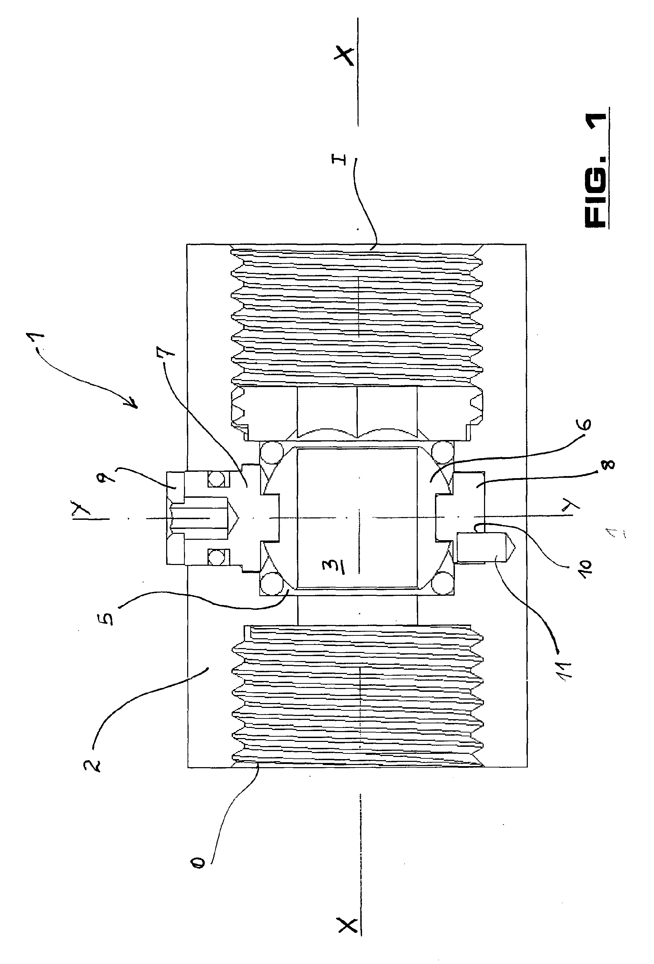

Figure 1 schematically shows a valve 1 according to the present invention considered in a longitudinal section, along the axis X-X thereof. The valve comprises a body 2 provided with an inner channel 3 for the fluid to flow through. In general, the fluid can be a liquid, a vapour or a gas, such as air, although the fluid is preferably water. The channel extends between an input section I and an output section O couplable to fluid supply lines. A seat 5, destined to house an on-off element 6, is produced in the channel 3.

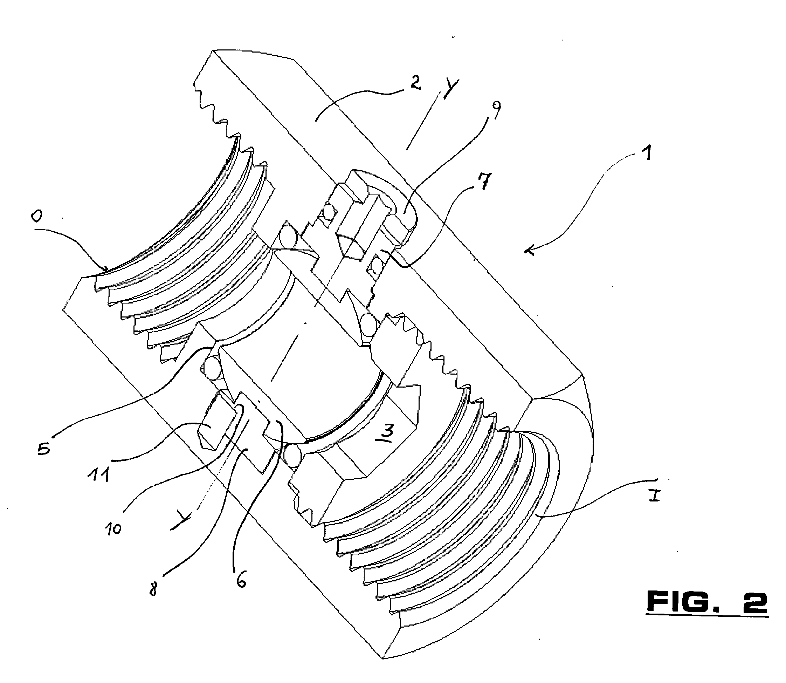

In general, the on-off element 6 can have different forms according to the applications for which the valve 1 is intended. For example, the valve can be of the ball type, as shown in Figures 1 and 2, and the element 6 in this case has a conventional generically spherical form. Alternatively, the valve 1 can be of the butterfly type, and in this case the on-off element 6 has a conventional disk form.

The spherical on-off element 6 can rotate about the axis Y-Y thereof between an open position and a closed position. When the on-off element 6 is in the open position the input section I and the output section O are in communication and the flow rate of fluid which can flow through the channel 3 is maximum. When the on-off element 6 is in the closed position the input section I and the output section O are not in communication and flow of fluid through the channel 3 is prevented. When the on-off element 6 is in an intermediate position between the open and the closed position the channel 3 is partially choked and the flow rate of fluid which can flow therethrough is less than the maximum rate.

Conventionally, valves are provided with external means having the function of blocking the on-off element in the open or in the closed position, so that these positions cannot be exceeded when said on-off element is operated. Typically, these means are provided in the control which operates the valve, for example a handgrip outside the body 2 of the valve and connected to said on-off element, with obvious limits with regard to the possibility of drastically reducing the dimensions of said control. As a rule, the means to block movement of the on-off element comprise one or more stop surfaces, produced on the outer surface of the valve body, which cooperate with the handgrip to limit movement of the on-off element. For example, ball valves are generally provided with stop surfaces which limit rotation of the control handgrip and, therefore, limit rotation of the spherical on-off element about the axis thereof, in the relative seat, at a pre-established angle.

The valve 1 according to the present invention is preferably provided with a control element 7 and a controlled element 8 connected to the on-off element 6. In the embodiment illustrated in Figures 1-7, the control element 7 is a grub screw fixedly coupled to the spherical element 6, which is an element with considerably smaller dimensions than the dimensions of said valve 1. The control grub screw 7 is housed at least partly in the body 2 of the valve and has a head portion 9 which remains accessible from outside the valve 1. The head portion 9 can engage a variety of tools for operation of the valve 1, such as screwdrivers, handles, hand-wheels, levers, handgrips, wrenches, for example an Allen wrench, etc.. The rotation imparted on the control grub screw 7 by means of a tool is transmitted to the on-off element 6 which turns in the seat 5 about the axis Y-Y.

The head portion 9 itself can be shaped ergonomically to enable it to be gripped directly by the user to operate the valve 1.

In one embodiment, the control grub screw 7 is housed concealed in the body 2 of the valve 1, that is, the grub screw 7 is essentially inserted in said body 2. Preferably, the head portion 9 is flush with the outer surface of the body 2. This allows the overall dimensions of the valve 1 to be minimized, with obvious advantages with regard to appearance.

The controlled element 8 is essentially interposed between the on-off element 6 and the body 2, in a position opposed to the control element 7. Preferably, the controlled element 8 is also a grub screw (Figures 1 and 2). The controlled grub screw 8 rotates integral with the spherical on-off element 6 in a specific housing produced in the seat 5.

In the valve 1 according to the present invention, reduction of the dimensions of the control element 7 during the design phase is simplified, as the means to limit movement of the on-off element 6 between the open and closed positions are inside the body 2. Advantageously, this in fact allows the dimensions of the control element, such as the grub screw 7 in Figures 1-7, to be minimized without requiting to take account of the conventional contact surfaces and without having to design said control element 7 or valve 1 with complicated and costly forms.

Preferably, the means to limit movement of the on-off element 6 include one or more contact or limit stop surfaces, for example provided in the seat 5, which cooperate With said on-off element.

According to the preferred embodiment of the present invention the contact or limit stop surfaces are produced on the controlled grub screw 8. Alternatively, these surfaces belong to a portion of the seat 5 or to a member integral therewith.

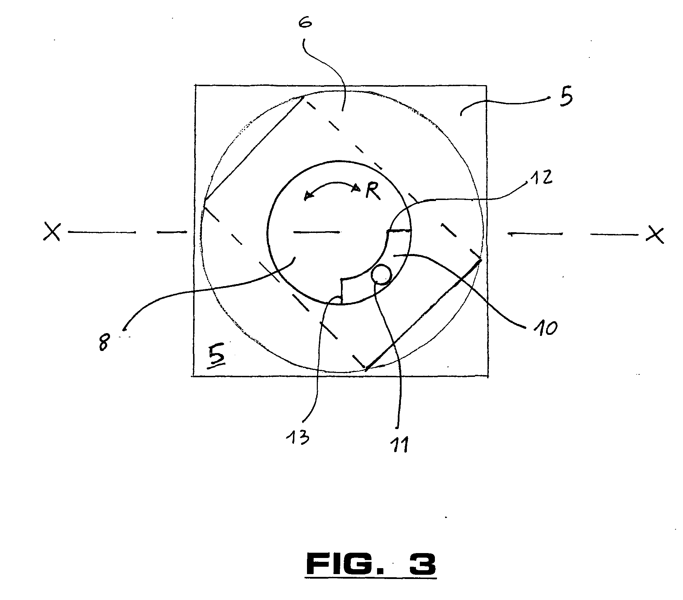

In the embodiment illustrated in Figures 1-3, the controlled grub screw 8 is provided with a guide 10 which extends according to an arc of circumference of approximately 90 degrees. A pin 11, integral with the seat 5 of the spherical element 6, engages the guide 10. Figure 3 schematically shows coupling between the pin 11 and the guide 10, viewed from below. When the valve 1 is operated through the control grub screw 7, the controlled grub screw 8 rotates about the axis Y-Y, that is, clockwise or counter-clockwise observing Figure 3 (direction R). The pin 11 is fixed with respect to the body 2 of the valve 1. Therefore, the pin 11 slides in the guide 10.

When the pin 11 engages one end of the guide 10, that is, when the pin 11 comes to rest against the wall 12 or against the wall 13 of the guide 10 (limit stop surface), the valve 1 is open or closed, meaning the on-off element is in the open or in the closed position. When the pin 11 engages the guide 10 in an intermediate section between the walls 12 and 13, as shown in Figure 3, the spherical element 6 only partially closes the channel 3 of the valve 1, that is, the flow of fluid is choked or regulated meaning the flow rate is reduced with respect to the maximum flow rate.

With regard to conventional valves, rotation of the on-off element is limited by the limit stop surfaces outside the valve body. Generally, these limit stop surfaces are produced with wide tolerances, for example they can be obtained by casting in one piece with the body of the relative valve. For this reason the opening and closing positions of the on-off element may not correspond to the desired angle of rotation, or may vary between valves in the same series. On the contrary, the walls 12 and 13 of the guide 10 of the valve according to the present invention limit rotation of the pin 11 within a precise angle. Consequently, the on-off element 6 can only rotate according to the angle defined by the walls 12 and 13 and the completely open and closed positions of the valve are defined with precision and do not vary between valves of the same series.

The pin 11 can be replaced by any other element having the same function. In the annexed figures the pin 11 has a generic cylindrical form and is inserted during assembly in a corresponding housing produced on the bottom of the seat 5 of the on-off element. The pin 11 is shown in the vertical position, that is, parallel to the axis Y-Y. Alternatively, the pin 11 can be positioned horizontally, that is, on a plane orthogonal to the axis Y-Y.

According to an alternative embodiment of the invention, the guide 10 can be produced on the base of the seat 5 and the pin 11 can be integral with the controlled grub screw 8.

Coupling between the guide 10 and the pin 11 prevents rotation of the spherical element 6 from continuing beyond the open and closed positions, with evident advantages with regard to correct operation of the valve. This characteristic is particularly useful in the case in which the valve 1 is operated, for example using a screwdriver in conditions of poor visibility, when the position of the head portion 9 of the control grub screw 7 with respect to the body 2 is not evident to the operator, or when the operator uses an Allen key which conceals the head portion 9 from view.

The on-off element can also differ in form, for example in the form of a generic disk if the valve is of the butterfly type. Notwithstanding the form of the on-off clement, the valve is provided with intemal means having the function of limiting movement between two predetermined positions.

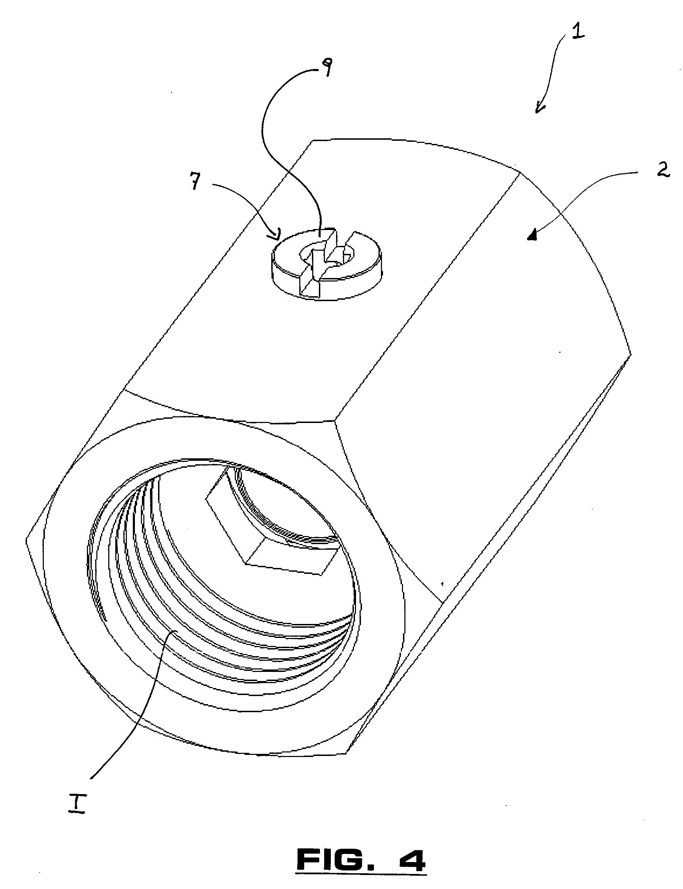

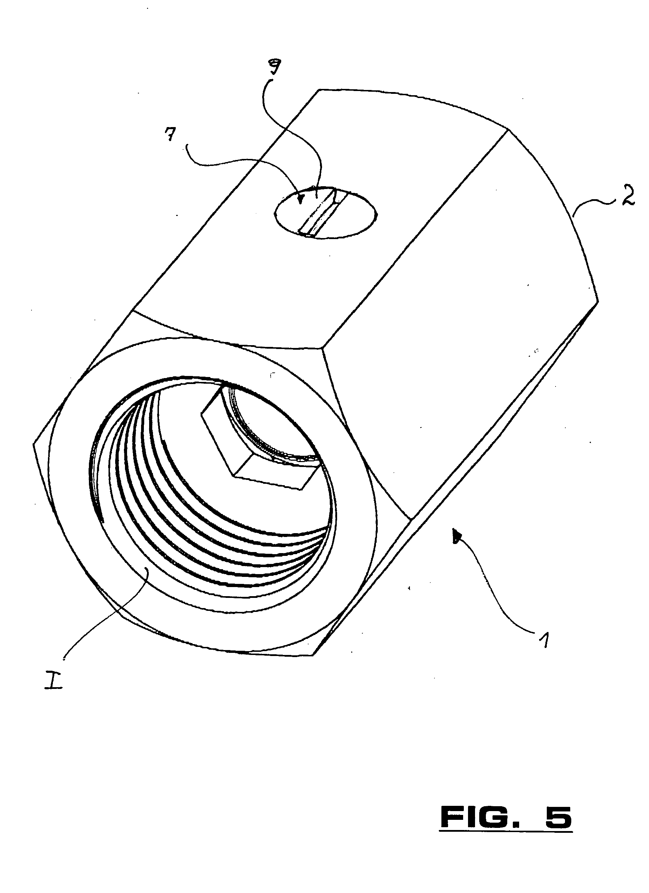

Figures 4 and 5 each show an external perspective view of a valve according to the present invention. In particular, the valve 1 shown in Figure 4 is provided with a control grub screw 7, the head portion 9 of which projects from the outer surface of the body 2 of the valve 1, analogous to the illustration in Figure 1. The valve 1 in Figure 5 is instead provided with a control grub screw 7 housed completely inside the body 2 of the valve 1, so that the head portion 9 is inserted and concealed in the body, flush with the outer surface of the valve 1.

The head portion 9 can be provided, as in the embodiments shown in Figures 4 and 5, with a slot for coupling with a screwdriver or an equivalent device. As the valve 1 is provided with the aforesaid means to limit rotation of the spherical on-off element, the user does not require to control the amplitude of rotation transmitted to the control grub screw 7 through the screwdriver, but can operate the valve directly. When the pin 11 comes to rest against one end of the guide 10 the control grub screw is blocked with precision in the open or closed position, preventing the user from rotating the spherical element further. For example, when the pin 11 is in the open position, the axes of the inner passage of the on-off element is aligned with the axis X-X of the body 2, that is, the angle between the axis X-X and the axis of the fluid passage through the on-off element 6 is equal to 0 (zero) degrees, while when the pin 11 is in the closed position, the axis of the passage inside the on-off element 6 is orthogonal to the axis X-X of the body 2, that is, the angle between the axis X-X and the axis of the fluid passage through the on-off element 6 is equal to 90 (ninety) degrees. In this way the user can control total or partial opening and closing of the valve without it being provided with cumbersome external levers.

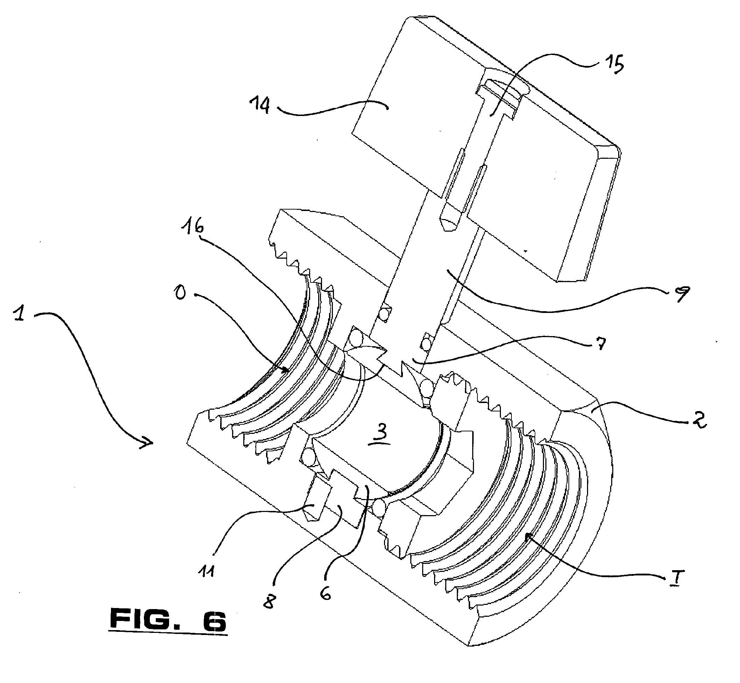

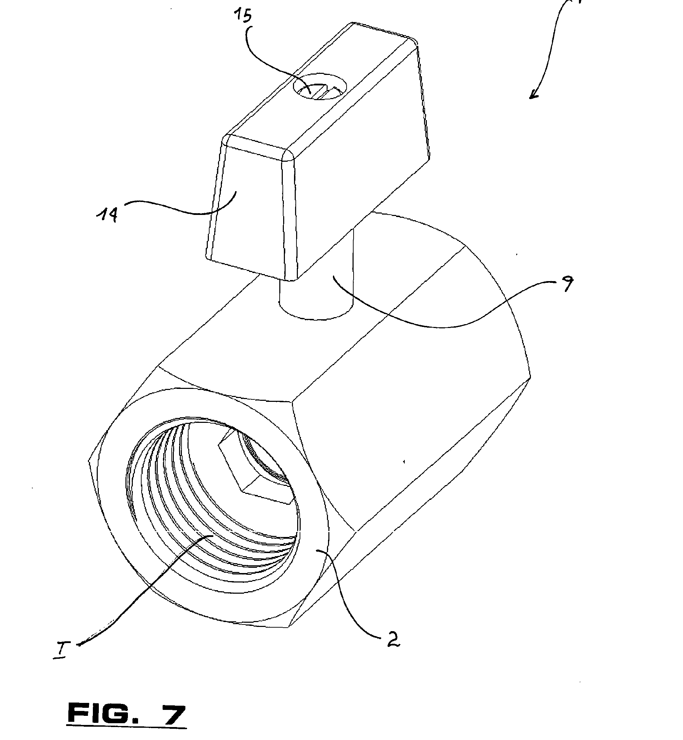

Figures 6 and 7 show a further embodiment of the valve 1 according to the present invention. The head portion 9 of the control grub screw 7 extends along the axis Y-Y for a greater length with respect to the previously described embodiments. The head portion 9 projects from the outer surface of the body 2 of the valve 1 for a length sufficient to allow coupling with a handgrip 14. The handgrip 14 can be coupled to the portion 9 of the grub screw 7 removably, for example by interlocking. In the embodiment shown in figures 6 and 7, the handgrip 14 is connected to the control grub screw 7 by means of a screw 15 or equivalent coupling element

In the valve 1 illustrated in Figure 6 the control grub screw 7 and the on-off element 6 are coupled by means of a dovetail coupling 16. Besides preventing the control grub screw 7 from being removed from the body of the valve during operation thereof, the coupling 16 stably supports the head portion 9 of the control grub screw 7. The coupling 16 between the grub screw 7 and the on-off element 6 can differ from said dovetail coupling, provided that the head portion 9 is suitably supported so that it cannot be bent, misaligned, etc.. In this way a head portion 9 having a much greater length than the thickness of the wall of the body 2 of the valve 1 can be used. In general, the control grub screw 7 can extend indefinitely outside the body 2 of the valve 1, so that it can be of any length. For example, the head portion 9 can extend for approximately 50 cm or more beyond the outer surface of the body 2, allowing the valve 1 to be controlled at a distance. This characteristic is particularly useful in cases in which the valve 1 is inserted in restricted spaces which are difficult for the user to access. For example, the valve 1 can be used in irrigation system lines, positioned in the ground and the portion 9 can project from the ground. The valve 1 can also be positioned in a service trap for fluid supply lines and the portion 9 can allow it to be controlled from outside the trap.

If necessary, the portion 9 can be coupled to a flexible extension having the function of facilitating control of the valve 1 from a distance.

Advantageously, the handgrip 14 can be connected to the control grub screw only when the valve 1 requires to be operated, so that it does not negatively influence the dimensions of said valve 1.

The body 2 of the valve can be produced in a material chosen from brass, bronze, steel, etc.. The control grub screw 7 and the controlled grub screw 8 can also be made of the same materials, as can the pin 11. Alternatively, the pin 11 and the grub screws 7 and 8 can be made of a plastic material.

The valve according to the present invention is simple to produce and assemble and does not require the use of bearings. Thanks to the fact that the means to limit movement of the on-off element, and consequently to regulate opening and closing of the valve, are positioned inside the valve body, the dimensions of said valve can be reduced, with obvious advantages with regard to appearance and easy coupling to fluid lines. Moreover, operation of the valve is simple even in the case in which said valve is not easily accessible to or visible by the user. In fact, said user can connect a tool to the valve and rotate the control grub screw and on-off element without the risk of bypassing the open and closed positions.

## Claims

1. Valve (1) for fluid distributing circuits, comprising a body (2) couplable to at least one fluid supply line, the body (2) being provided with a channel (3) for said fluid to flow through and with a seat (5) housing an on-off element (6) for said fluid in said channel (3), said on-off element (6) being movable between an open position, wherein said fluid flows through said channel (3), and a closed position, wherein flow of said fluid in said channel (3) is prevented and also composing static means (11) to limit movement of said on-off element (6) between said open position and said closed position, **characterized in that** said static means (11) to limit movement are inside said body (2).

2. Valve as claimed in claim 1, **characterized in that** said on-off element (6) is rotatable in said seat (5) and **in that** said static means (11) to limit movement of said on-off element comprise at least one limit stop surface (11) for said on-off element (6).

3. Valve as claimed in claim 2, **characterized in that** said at least one limit stop surface (11) is produced in said seat (5).

4. Valve as claimed in any one of the previous claims, **characterized in that** said on-off element (6) is of the spherical type and **in that** a portion (8) of said on-off element (6) is provided with a guide (10) and said limit stop surface (11) is integral with said seat (5) and engages said guide (10).

5. Valve as claimed in any one of the previous claims, **characterized in that** said on-off element (6) is of the spherical type and **in that** said limit stop surface (11) is integral with a portion (8) of said on-off element (6) and engages a guide (10) produced in said seat (5).

6. Valve as claimed in claim 4 or in claim 5, **characterized in that** said guide (10) extends along an arc of circumference and said limit stop surface (11) is a pin.

7. Valve as claimed in claim 6, **characterized in that** said on-off element (6) is coupled to a control grub screw (7), which can be operated from the outside of said body (2), and to a controlled grub screw (8), opposed to said control grub screw (7) with respect to said on-off element (6) and interposed between said element and the relative seat (5), said guide (10) being produced in said controlled grub screw (8) or in said seat (5) depending on whether said pin (11) is integral with said seat (5) or with said controlled grub screw (8) respectively.

8. Valve as claimed in any one of the previous claims, **characterized in that** said control grub screw (7) is housed concealed in said body (2) and the head portion (9) of said grub screw is essentially flush with the outer surface of said body (2).

9. Valve as claimed in claim 7, **characterized in that** said control grub screw (7) extends outside said body (2) for a length greater than the thickness of the wall of the body (2).

10. Valve as claimed in one of the previous claims from 7 to 9, **characterized in that** said outer surface (9) of the control grub screw (7) can be coupled to external elements (14) to operate said on-off element (6).

11. Valve as claimed in claim 10, **characterized in that** said external operating elements (14) comprise a device chosen from a handle, a hand-wheel, a handgrip, a screwdriver, etc..

12. Valve as claimed in one of the previous claims, **characterized in that** said coupling (16) between said control grub screw (7) and said on-off element (6) is of the dovetail type.
